(19) Europäisches Patentamt
European Patent Office
Office européen des brevets

(11) Numéro de publication : **0 391 760 B1**

(12) **FASCICULE DE BREVET EUROPEEN**

(45) Date de publication du fascicule du brevet :
04.01.95 Bulletin 95/01

(51) Int. Cl.⁶ : **H04N 5/44**

(21) Numéro de dépôt : **90400757.2**

(22) Date de dépôt : **20.03.90**

(54) **Dispositif de conversion de fréquence trame pour un récepteur de télévision haute définition, et procédé de détection du mouvement dans une image de télévision codée.**

(30) Priorité : **23.03.89 FR 8903861**

(43) Date de publication de la demande :
**10.10.90 Bulletin 90/41**

(45) Mention de la délivrance du brevet :
**04.01.95 Bulletin 95/01**

(84) Etats contractants désignés :
**DE ES FR GB IT NL**

(56) Documents cités :
**EP-A- 0 018 856
GB-A- 2 195 061
FERNSEH- UND KINO-TECHNIK, vol. 42, no.
11, 1988, pages 545-550; M. PLANHOLT et al.:
"Progressive Abtastung-die zukunftssichere
Lösung für HDTV"**

(73) Titulaire : **LABORATOIRE EUROPEEN DE RECHERCHES ELECTRONIQUES AVANCEES
9, Place des Vosges
La Défense 5
F-92400 Courbevoie (FR)**

(72) Inventeur : **Gillies, David
Thomson-CSF,
SCPI - Cédex 67
F-92045 Paris la Défense (FR)**
Inventeur : **Moraillon, Jean-Yves
Thomson-CSF,
SCPI - Cédex 67
F-92045 Paris la Défense (FR)**

(74) Mandataire : **Ruellan-Lemonnier, Brigitte et al
THOMSON-CSF,
SCPI,
B.P. 329,
50, rue Jean-Pierre Timbaud
F-92402 Courbevoie Cédex (FR)**

## Description

La présente invention concerne un dispositif de conversion de fréquence trame pour un récepteur de télévision haute définition, plus particulièrement un dispositif de conversion de fréquence trame pour un récepteur de télévision haute définition susceptible de recevoir en entrée des signaux de chrominance ou des signaux de luminance présentant des caractéristiques différentes quant aux nombres de lignes traitées, mais une même fréquence trame.

La présente invention concerne aussi un procédé de détection du mouvement dans une image de télévision codée, qui peut être utilisé notamment lorsque les signaux d'entrée ne présentent pas d'informations DATV (pour Digitally Assisted Television, en langue anglaise) donnant des indications de mouvement.

La tendance actuelle est à la construction de récepteurs de télévision qui permettent l'affichage d'une image haute définition utilisant un signal permettant un affichage 1250 lignes ou 900 lignes avec un entrelacement 2:1 à une fréquence trame de 100 Hz et cela aussi bien à partir de signaux d'entrée haute définition que des signaux d'entrée existants. En conséquence, il est nécessaire de pouvoir convertir les signaux d'entrée tels que les signaux d'entrée 1250/2:1/50 Hz HD-MAC décodés ou les signaux d'entrée 625/2:1/50 Hz, PAL, SECAM ou MAC décodés en un signal d'affichage haute définition. Pour pouvoir utiliser ces différents types de signaux d'entrée dans un même récepteur de télévision, il est nécessaire d'utiliser un dispositif de conversion de fréquence trame compatible avec chaque type de signal d'entrée.

La présente invention a donc pour but de fournir un dispositif de conversion de fréquence trame qui présente l'avantage de pouvoir être utilisé aussi bien avec des signaux d'entrée HD-MAC décodés qu'avec des signaux d'entrée PAL, SECAM ou MAC décodés en ne modifiant que légèrement la structure de base de manière à prendre en compte les fréquences d'échantillonnage différentes des signaux HD-MAC et des signaux PAL, SECAM ou MAC.

La présente invention a aussi pour but de fournir un dispositif de conversion de fréquence trame qui soit facilement réalisable sous forme d'un circuit intégré demandant peu de surface de semi-conducteur par rapport aux autres éléments du récepteur de télévision.

En conséquence, la présente invention a pour objet un dispositif de conversion de fréquence trame pour un récepteur de télévision haute définition susceptible de recevoir en entrée des signaux de chrominance ou des signaux de luminance de caractéristiques différentes mais de même fréquence trame, et de donner en sortie un signal à une fréquence trame différente. Cet objet est réalisé par un dispositif de conversion de fréquence trame comprenant les caractéristiques mentionnées aux revendications 1 et 2.

La structure de base ci-dessus peut être utilisée aussi bien pour le canal luminance ou le canal chrominance des signaux 1250/2:1/50 Hz HD-MAC que pour le canal luminance ou le canal chrominance des signaux 625/2:1/50 Hz MAC, PAL, SECAM décodés ou tous autres signaux de même type tels que les signaux Vidéo conforme au rapport 601 du CCIR. Certaines caractéristiques, telles que les fréquences d'écriture et de lecture des mémoires, la taille des mémoires de trame, les fréquences de fonctionnement des dispositifs de traitement seront spécifiques du type de signal vidéo en entrée.

Selon un mode de réalisation préférentiel, chaque mémoire de trame comporte deux mémoires de trame recevant des signaux différents. Dans le cas de signaux de luminance 1250 lignes, échantillonnés à 54 MHz, les mémoires de trame sont disposées de telle sorte que les échantillons alternés sont écrits dans les mémoires alternées à une fréquence de 13,5 MHz. Dans le cas de signaux de chrominance échantillonnés à 27 MHz, la fréquence d'écriture sera de 6,75 MHz. Le fréquence trame des entrées est transformée de 50 Hz en 100 Hz simplement en lisant les mémoires à une vitesse deux fois plus rapide que la vitesse d'écriture à savoir dans le présent cas à 27 MHz ou à 13,5 MHz. Ceci permet de faire fonctionner les mémoires de trame à une fréquence raisonnable. Les sorties sont alors multiplexées ensemble pour former les données à 54 MHz envoyées sur les dispositifs de traitement des signaux de type statique ou de type dynamique.

Dans le cas de signaux d'entrée 625 lignes, plus particulièrement lorsqu'une détection de mouvement est nécessaire, quatre trames successives doivent être stockées pour effectuer une détection du mouvement de l'image en utilisant deux images successives. Chaque mémoire de trame effectue la conversion de 50 à 100 Hz tout en permettant un accès simultané à quatre trames d'entrée consécutives.

Ce type d'organisation permet donc d'utiliser la même structure de base pour un dispositif de conversion de fréquence fonctionnant aussi bien avec des signaux d'entrée 1250/2:1/50 Hz HD-MAC décodés que des signaux d'entrée 625/2:1/50 Hz MAC, PAL, SECAM décodés.

Selon un mode de réalisation préférentiel, les dispositifs de traitement de signaux de type dynamique et de type statique sont constitués, de préférence, par des filtres verticaux utilisant la même structure de base. Ceci permet de les réaliser très facilement sous forme de circuits intégrés.

De préférence, le dispositif de traitement de signaux de type dynamique est constitué par un filtre vertical comportant en série quatre cellules à retard d'une ligne, cinq multiplicateurs recevant sur une entrée un coefficient multiplicateur fonction du signal d'entrée et sur l'autre entrée la sortie d'une cellule ou l'entrée de la première cellule et quatre additionneurs, le premier additionnant les sorties des deux premiers multiplicateurs, les autres additionnant la sortie de l'additionneur précédant avec la sortie du multiplicateur de rang plus un, ledit filtre vertical étant connecté aux mémoires de trame paires et impaires par l'intermédiaire d'un multiplexeur fonctionnant à une fréquence moitié de la fréquence trame d'entrée.

De même, le dispositif de traitement de signaux de type statique est constitué par deux filtres verticaux identiques, connectés respectivement en sortie des mémoires de trame paires et des mémoires de trame impaires et dont les sorties sont connectées à un additionneur par une cellule à retard d'une ligne connectée en sortie de l'additionneur.

De préférence, chaque filtre vertical est constitué dans ce cas, de deux cellules à retard d'une ligne, de trois multiplicateurs recevant sur une entrée un coefficient multiplicateur fonction du signal d'entrée et sur l'autre entrée la sortie d'une cellule ou l'entrée de la première cellule et de deux additionneurs, le premier additionnant les sorties des deux premiers multiplicateurs, l'autre additionnant la sortie de l'additionneur précédent avec la sortie du multiplicateur de rang +1, ledit filtre vertical étant connecté soit aux mémoires de trame paires, soit aux mémoires de trame impaires.

Selon un autre mode de réalisation pouvant être utilisé avec des signaux d'entrée 1250/2:1/50 Hz, le dispositif de traitement des signaux de type statique est constitué par un multiplexeur connecté respectivement aux mémoires de trame paires et aux mémoires de trame impaires et fonctionnant à la fréquence trame, et par deux cellules à retard d'une ligne connectées en série en sortie du multiplexeur.

Pour limiter la fréquence de fonctionnement des filtres verticaux, de préférence le dispositif de conversion de fréquence trame est constitué par deux dispositifs de fréquence trame tels que décrits ci-dessus connectés en parallèle entre un démultiplexeur envoyant les pixels pairs sur un dispositif et les pixels impairs sur l'autre dispositif, et un multiplexeur de sortie.

D'autre part, suivant le nombre de lignes souhaitées en sortie, à savoir 1250 ou 900 lignes, le signal de sortie du dispositif de conversion de fréquence trame est envoyé sur une registre tampon de type FIFO dont la capacité sera fonction de la conversion à effectuer, 625 lignes en 900 ou 1250 lignes et 1250 lignes en 900 lignes. D'autre part, dans le cas des signaux HD-MAC, le décodeur avec réduction de largeur de bande permet d'obtenir une information DATV décodée qui peut être utilisée comme information de mouvement pour permettre un choix correct entre une conversion de fréquence trame de type statique ou de type dynamique suivant l'image reçue.

Toutefois, les signaux permettant un affichage à 625 lignes ne contiennent pas tous des informations DATV. Comme une détection du mouvement est nécessaire pour obtenir des signaux de commande de mouvement utilisé dans le dispositif de conversion, la présente invention a aussi pour but de fournir un nouveau procédé de détection du mouvement dans une image de télévision codée utilisé avec des signaux vidéo 625 lignes.

Conformément à la présente invention, le procédé de détection de mouvement dans une image de télévision codée est caractérisé en ce qu'il consiste à appliquer, au niveau des pixels de même position spatiale correspondant à deux images temporellement différentes l'algorithme suivant :

$$- \, DP_{on} = \sum_{y\,=\,-\,i}^{+i} \left| P_{yn} - P_{y\,n\,-\,1} \right|$$

(avec y correspondant à des lignes image successives et n et n - 1 à deux images temporellement différentes, et i un entier représentant le nombre de ligne-images à traiter encadrant la ligne-image choisie),
- puis à comparer la valeur obtenue $DP_{on}$ à une valeur de seuil et à émettre une information de mouvement ou de non mouvement en fonction du résultat de la comparaison.

De préférence l'algorithme ci-dessus est appliqué en utilisant les pixels appartenant à cinq lignes-image consécutives. D'autre part, pour réduire la sensibilité au bruit, on effectue une décision majoritaire sur plusieurs informations de mouvement. Une information de mouvement finale est obtenue en comparant les informations de mouvement données par plusieurs pixels de position spatiale différente appartenant à une même ligne image.

D'autres caractéristiques et avantages de la présente invention apparaîtront à la lecture de la description faite ci-après de différents modes de réalisation non limitatifs avec référence aux dessins ci-annexés dans lesquels :
- la figure 1 est un schéma synoptique simplifié d'un récepteur de télévision haut définition susceptible de recevoir un dispositif de conversion de fréquence conforme à la présente invention ;

- la figure 2 est un schéma synoptique simplifié d'un dispositif de conversion de fréquence conforme à la présente invention utilisé pour des signaux de luminance du type 1250/2:1/50 Hz ;
- la figure 3 est un schéma synoptique d'un dispositif de conversion de fréquence utilisé dans le cas de signaux de luminance du type 625/2:1/50 Hz ;
- la figure 4 est un chronogramme expliquant le fonctionnement du dispositif de la figure 3 ;
- la figure 5 est un schéma synoptique des dispositifs de traitement utilisés dans le dispositif de conversion de fréquence de la présente invention dans le cas d'une conversion 1250/2:1/50 Hz en 1250/2:1/100 Hz ;
- la figure 6 est un schéma synoptique des dispositifs de traitement utilisé dans un dispositif de conversion de fréquence selon un autre mode de réalisation ;
- la figure 7 est un schéma synoptique d'une cellule à retard d'une ligne utilisée dans les dispositifs de traitement des figures 5 et 6, et
- la figure 8 est un schéma synoptique d'un dispositif de détection du mouvement dans une image de télévision codée utilisé avec le dispositif de conversion de fréquence de la figure 3.

Pour simplifier, la description dans les différentes figures, les mêmes éléments portent les mêmes références.

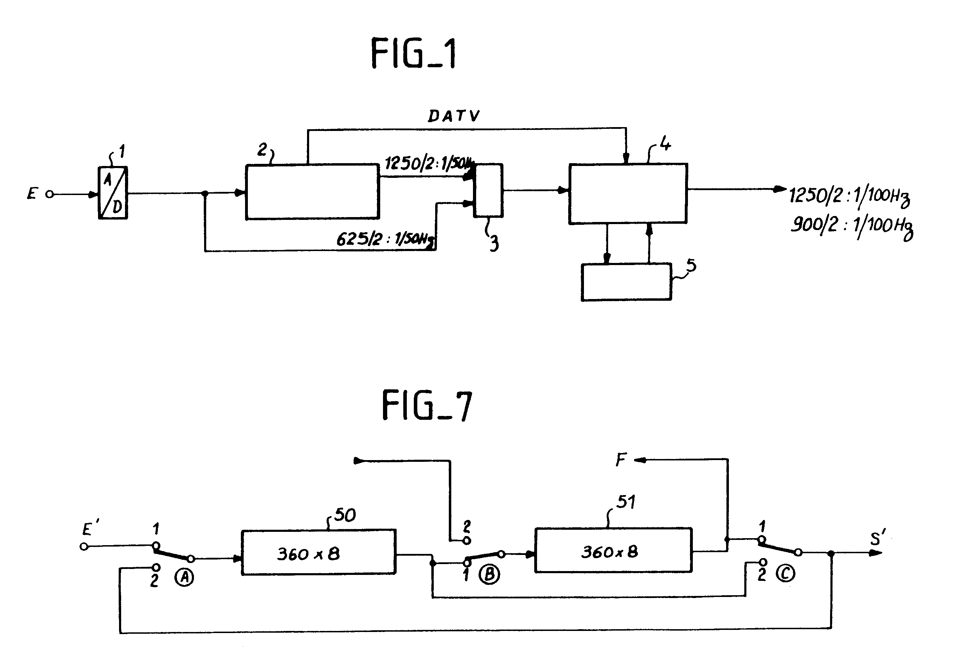

Comme représenté sur la figure 1, la structure de base d'un récepteur de télévision haute définition est constituée essentiellement par un convertisseur analogique-numérique 1 qui reçoit en entrée des signaux vidéo tels que des signaux 1250/2:1/50Hz HD-MAC ou des signaux 625/2:1/50Hz PAL, SECAM ou MAC. Les signaux du type 625/2:1/50Hz en sortie du convertisseur 1 sont envoyés directement sur un dispositif de commutation 3 tandis que les signaux 1250/2:1/50Hz sont envoyés sur ce dispositif de commutation 3 par l'intermédiaire d'un décodeur 2 avec réduction de largeur de bande de type connu. Le dispositif 3 permet d'envoyer soit les signaux 1250/2:1/50 Hz, soit les signaux 625/2:1/50Hz vers un dispositif de conversion de fréquence 4 conforme à la présente invention. Le récepteur de télévision de la figure 1 comporte aussi un dispositif de détection du mouvement 5 connecté au dispositif de conversion de fréquence 4 pour réaliser si nécessaire une détection du mouvement dans une image de télévision PAL, SECAM, MAC décodée, comme cela sera expliqué de manière plus détaillée ci-après. D'autre part, le décodeur 2 permet d'obtenir une information DATV donnant des caractéristiques de mouvement. Cette information est elle aussi envoyée sur le dispositif 4 comme symbolisé par la ligne DATV. Le signal de sortie S est utilisé pour l'affichage sur l'écran. Dans ce cas, c'est un signal haute définition du type 1250/2:1/100 Hz ou 900/2:1/100 Hz.

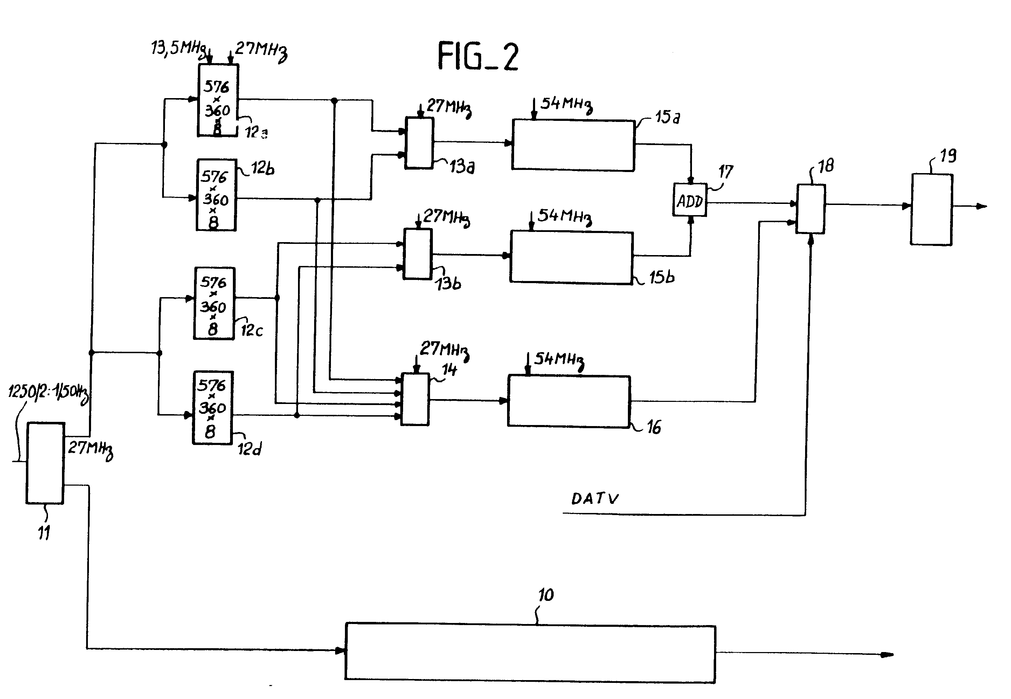

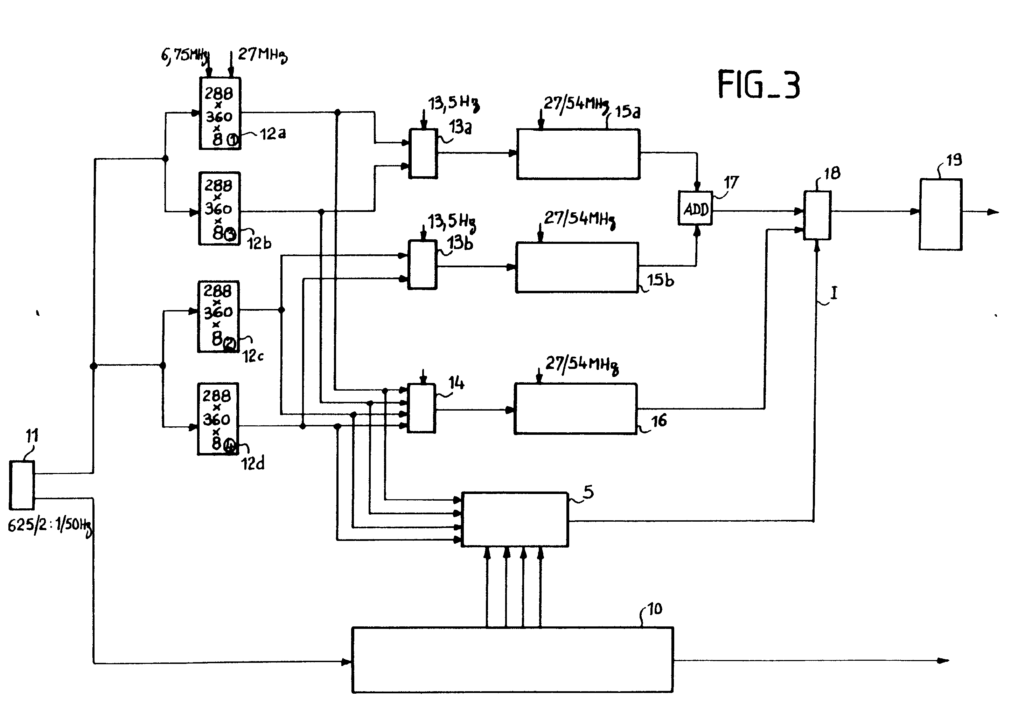

On décrira maintenant avec référence aux figures 2 et 3, la structure de base schématique d'un dispositif de conversion de fréquence conforme à la présente invention permettant d'obtenir à partir d'un signal d'entrée de fréquence trame 50 Hz un signal de fréquence trame 100 Hz. On rappellera tout d'abord que le dispositif de conversion de fréquence 4 représenté à la figure 1 est constitué en fait de plusieurs dispositifs de conversion de fréquence présentant la même structure de base mais dont certaines caractéristiques ont été modifiées pour s'adapter au type de signal reçu en entrée. En conséquence, les figures 2 et 3 représentent simplement le dispositif de conversion de fréquence utilisé, soit avec un signal de luminance de type 1250/2:1/50 Hz HD-MAC pour la figure 2, soit avec un signal de luminance de type 625/2:1/50 Hz PAL, SECAM, MAC pour la figure 3. Le même type de dispositifs de conversion de fréquence est utilisé pour les canaux de chrominance des signaux 1250/2:1/50 Hz et 625/2:1/50 Hz. Dans ce cas, les fréquences de modulation sont différentes. En effet, les fréquences d'échantillonnage des signaux 1250/2:1/50Hz HD-MAC sont de 54MHz pour la luminance, et de 27MHz pour le chrominance et les fréquences d'échantillonnage des signaux 625/2:1/50Hz PAL, SECAM ou MAC correspondent aux normes données par le rapport 601 du CCIR et sont de 13,5MHz pour la luminance et 6,75MHz pour la chrominance.

D'autre part, pour limiter la fréquence de fonctionnement des différents dispositifs utilisés dans le dispositif de conversion de fréquence, le traitement a été divisé en deux, les pixels pairs et impairs étant envoyés sur deux dispositifs identiques montés en parallèle entre un démultiplexeur et un multiplexeur. Sur les figures 2 et 3, le bloc 10 représente symboliquement le dispositif de conversion utilisé pour le traitement des pixels pairs.

On décrira maintenant de manière détaillée la partie du dispositif de conversion de fréquence utilisée pour le traitement des pixels impairs. Comme représenté sur la figure 2, les signaux correspondant aux pixels impairs sont isssus d'un démultiplexeur 11 et sont envoyés sur quatre mémoires de trame 12a, 12b, 12c, 12d. Les mémoires de trame 12a et 12b permettent le stockage des trames impaires, tandis que les mémoires de trame 12c et 12d permettent le stockage des trames paires. Dans le cas de la figure 2 qui traite les signaux 1250/2:1/50Hz HD-MAC, chaque mémoire de trame 12 a une capacité de 576 x 360 x 8, (576 correspondant aux lignes utiles, 360 au nombre de pixels impairs utiles par ligne et 8 au nombre de bits de codage de chaque pixel). Ces mémoires sont disposées de telle sorte que les échantillons alternés sont écrits dans les mémoires alternées à une fréquence d'échantillonnage de 13,5 MHz, à savoir à une fréquence d'échantillonnage moitié de la fréquence des données en entrée qui est de 27 MHz. La sortie des mémoires de trame 12a et 12b est envoyée à travers un multiplexeur 13a multiplexant les deux mémoires à une fréquence d'échantillonnage de 27 MHz vers un filtre vertical 15a traitant les données à une fréquence d'échantillonnage de 54 MHz. Le filtre vertical sera décrit de manière détaillée ci-après. De même, les sorties des mémoires de trame 12c et 12d sont envoyées vers un multiplexeur 13b identique au multiplexeur 13a dont la sortie est connectée à un filtre vertical 15b identique au filtre 15a. Les sorties des deux filtres 15a et 15b sont envoyées sur un additionneur 17 dont la sortie est connectée en entrée d'un dispositif de commutation 18. D'autre part, les sorties des mémoires de trame 12a, 12b, 12c et 12d sont aussi envoyées sur un multiplexeur 14 effectuant le multiplexage de ces sorties à une fréquence d'échantillonnage de 27MHz. Le multiplexeur 14 sélectionne successivement la sortie des mémoires de trame 12a, 12c, 12b, 12d, chacune pendant une durée de 20ms. Cette séquence se répète toutes les 80ms, ou avec une fréquence de 12,5 Hz. La sortie du multiplexeur est connectée à un filtre vertical dynamique 16 donnant des données à 54 MHz. La sortie du filtre vertical 16 est envoyée vers le dispositif de commutation au multiplexeur 18 qui commute soit vers l'additionneur 17 soit vers le filtre 16 en fonction d'une information de mouvement DATV. Comme représenté sur la figure 2, la sortie du dispositif 18 est envoyée sur un registre tampon de sortie 19 qui donne en sortie le signal d'affichage qui peut être un signal du type 1250/2:1/100 Hz ou un signal du type 900/2:1/100 Hz.

Comme représenté sur la figure 3, dans le cas des signaux d'entrée de type 625/2:1/50 Hz, les mémoires de trame 12a, 12b, 12c et 12d présentent une capacité de 288 x 369 x 8 (288 correspondant aux lignes utiles, 360 au nombre de pixels impairs utilisés par ligne, huit au codage de chaque pixel). La fréquence d'écriture en mémoire est de 6,75 MHz pour des signaux de luminance tandis que la fréquence de lecture est de 27MHz. La fréquence d'échantillonnage d'entrée est multipliée par quatre pour les raisons suivantes : la transformation de la fréquence de trame de 50Hz à 100Hz accroît la fréquence d'échantillonnage de deux. De plus, chaque ligne d'entrée est répétée deux fois au niveau de la sortie de la mémoire de trame de telle sorte qu'avec 625 lignes en entrée, on obtienne 1250 lignes en sortie. Ceci augmente à nouveau la fréquence d'échantillonnage d'un facteur 2. Ceci est nécessaire pour le fonctionnement des filtres verticaux ci-après. De même les multiplexeurs 13a, 13b et 14 ont une fréquence de multiplexage de 12,5MHz et les filtres 15a, 15b et 16 fonctionnent à des fréquences de 27MHz. On retrouve un additionneur 17 recevant les sorties des filtres 15a et 15b, un dispositif de commutation 18 basculant en fonction d'une information I issue d'un détecteur de mouvement 5 qui sera décrit de manière plus détaillée ci-après. Dans ce cas, on utilise quatre mémoires de trame pour pouvoir réaliser la détection du mouvement. Chaque mémoire de trame impaire 12a et 12b ou paire 12c et 12d stocke chacune une trame d'entrée, ce qui fait que quatre trames successives sont stockées dans les mémoires 12a, 12b, 12c, 12d, tandis que dans le dispositif de la figure 2, les deux mémoires de trame impaires 12a et 12b ou paires 12c et 12d stockent une trame d'entrée paire ou une trame d'entrée impaire.

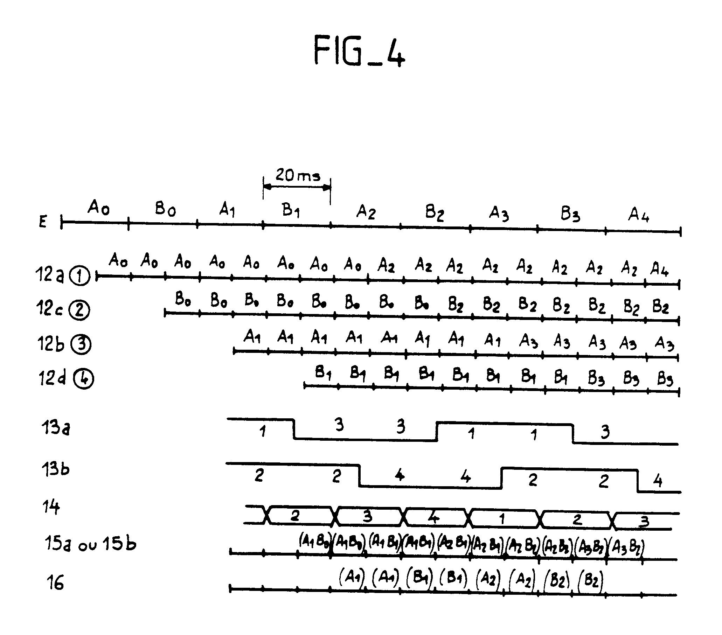

On expliquera maintenant le fonctionnement du dispositif de la figure 3 en se référant plus particulièrement au chronogramme de la figure 4. Le signal E correspond au signal d'entrée à 50Hz et représent des trames successives A0, B0, A1, B1, A2, B2, A3, B3, etc... dont la durée est de 20 millisecondes. Dans ce cas, les trames impaires A0, A1, A2, A3, A4 sont stockées dans les mémoires de trames 12a et 12b de telle sorte que les trames A0, A2, A4 soient stockées dans la mémoire 12a et les trames A1, A3, etc ... dans la mémoire 12b. De même les trames paires B0, B1, B2, B3 sont stockées alternativement dans les mémoires 12c, 12b de telle sorte que les trames B0, B2, etc .. soient stockées dans la mémoire 12c et les trames B1, B3, etc ... soient stockées dans la mémoire 12d. Les sorties des mémoires 12a et 12b, et des mémoires 12c et 12d sont respectivement multiplexées par les multiplexeurs 13a, 13b de manière à obtenir pendant deux trames ou 40 millisecondes, la sortie d'une des mémoires avec un décalage d'une trame entre les deux multiplexeurs 13a et 13b. En sortie du multiplexeur 14, on obtient successivement les sorties des mémoires 1, 2, 3, 4 pendant une durée d'une trame d'entrée, à savoir 20 millisecondes. Ainsi en sortie du filtre vertical statique 15a ou 15b, on obtient à une fréquence double de la fréquence de départ, respectivement les trames A1, A1, A1, A1, A2 ... et les trames B0, B0, B1, B1, B1, B1, B2, ..., ces trames étant maintenues chacune quatre fois. De même, en sortie du filtre dynamique 16, on obtient successivement à une fréquence double de la fréquence de départ les trames A1, A1, B1, B1, A2, A2, B2, B2, ces trames étant maintenues deux fois comme représenté sur la figure 4.

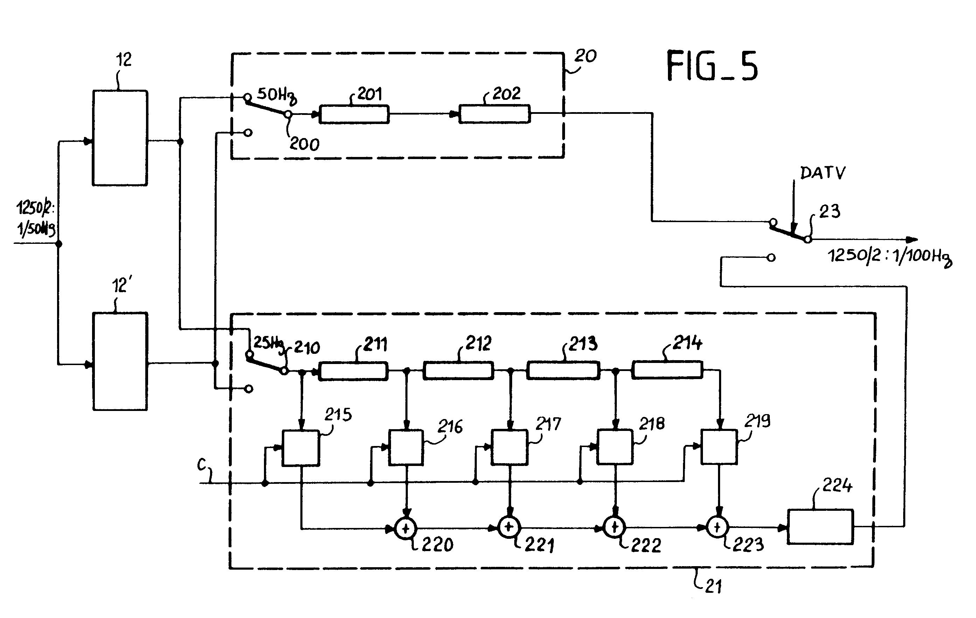

On décrira maintenant avec référence à la figure 5, un mode de réalisation des dispositifs de traitement de type statique 20 et de type dynamique 21 utilisés dans le cas d'un signal 1250/2:1/50 Hz transformé en un signal 1250/2:1/100 Hz. Dans ce cas, on s'aperçoit que le dispositif de traitement de type statique est en fait constitué d'un simple multiplexeur 200 à 50 Hz connectant alternativement la mémoire de trame impaire 12 et la mémoire de trame paire 12′ constituées en fait respectivement des deux mémoires 12a, 12b et 12c, 12d dans la figure 2, et de deux cellules à retard d'une ligne 201 et 202 connectées en série. En fait, ces cellules 201 et 202 sont utilisées pour égaliser le temps de transit des informations entre le dispositif de traitement de type statique 20 et le dispositif de traitement de type dynamique 21. Le dispositif de traitement de type dynamique 21 est lui constitué d'un filtre vertical connecté par un multiplexeur 210 multiplexant à 25 Hz les sorties

5

des mémoires de trame 12 et 12'. La sortie du multiplexeur 210 est envoyée sur quatre cellules à retard d une ligne identiques 211, 212, 213, 214 montées en série et susceptibles de stocker chacune une ligne de mémoire de trame. D'autre part, le filtre vertical comporte cinq multiplicateurs 215, 216, 217, 218, 219 qui reçoivent sur une de leurs entrées un coefficient multiplicateur C fonction du type de signal d'entrée traité, à savoir 1250 lignes dans le présent cas. Les multiplicateurs 215, 216, 217, 218, 219 reçoivent sur leur autre entrée respectivement la sortie du multiplexeur 210 pour le multiplicateur 215, la sortie de la cellule 211 pour le multiplicateur 216, la sortie de la cellule 212 pour le multiplicateur 217, la sortie de la cellule 213 pour le multiplicateur 218 et la sortie de la cellule 214 pour le multiplicateur 219. De même, les sorties des multiplicateurs 215 à 219 sont envoyées respectivement sur des additionneurs 220, 221, 222, 223. L'additionneur 220 reçoit les sorties des multiplicateurs 215 et 216. Les autres additionneurs 221, 222, 223 reçoivent respectivement la sortie d'un multiplicateur 217, 218, 219 et la sortie de l'additionneur précédent 220, 221 et 222. La sortie de l'additionneur 223 est lui envoyé sur un dispositif de coupure 224. Dans le filtre vertical décrit ci-dessus, les multiplicateurs peuvent être remplacés par de simples cellules d'addition et de décalage. Les dispositifs de traitement de type statique 20 et de type dynamique 21 sont connectés chacun sur une entrée d'un commutateur 23 dont la commutation est commandée par le signal DATV en fonction de la détection d'une information de mouvement. On obtient donc en sortie du dispositif 23 un signal à afficher de type 1250/2:1/100 Hz.

Ainsi, dans le cas de la figure 5 correspondant à une conversion 1250/2:1/50Hz en 1250/2:1/100 Hz, dans le cas des entrées statiques, chaque image d'entrée complète peut être utilisée directement pour générer au niveau de l'affichage deux trames entrelacées, tandis que dans le cas des entrées de type dynamique, chaque trame entrelacée est générée à partir d'une trame d'entrée.

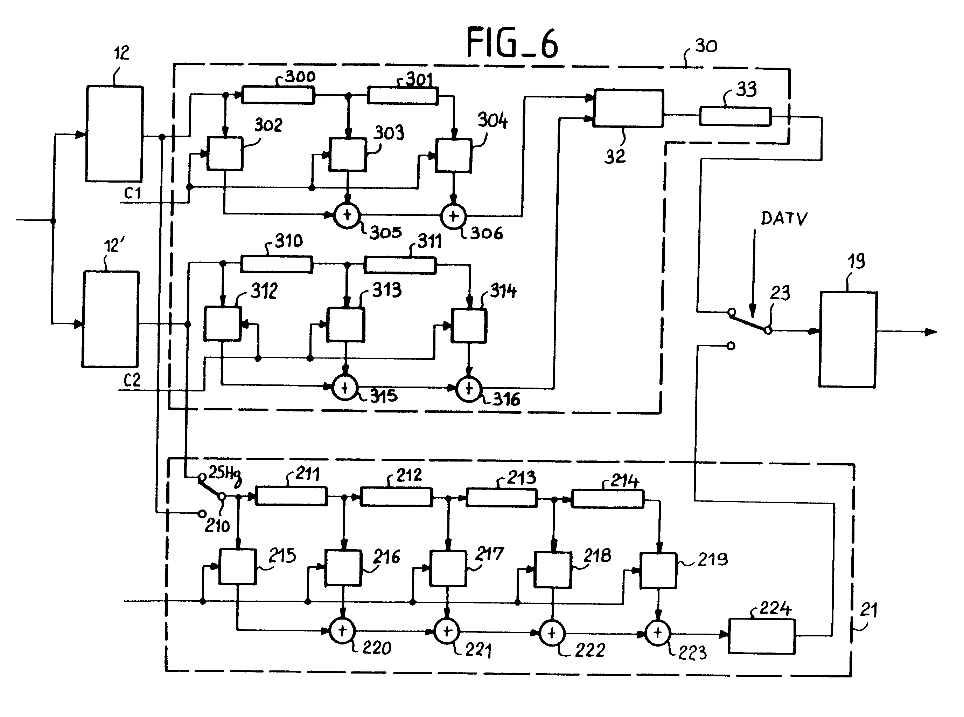

On décrira maintenant, avec référence à la figure 6, un autre mode de réalisation d'un dispositif de traitement de type statique 30 qui est utilisé plus particulièrement dans le cas d'une conversion 625 lignes en 1250 ou 900 lignes ou dans le cas d'une conversion 1250 en 900 lignes. Dans ce cas, on utilise deux circuits de filtrage identiques, l'un pour les trames paires l'autre pour les trames impaires, comme représenté à la figure 6. Chaque circuit de filtrage vertical est constitué de deux cellules à retard d'une ligne 300, 301 ou 310, 311, de trois multiplicateurs ou cellules d'addition et de décalage 302. 302, 304 ou 312, 313, 314 et de deux additionneurs 305, 306 ou 315, 316. Les multiplicateurs reçoivent sur une de leurs entrées un coefficient multiplicateur C1 ou C2 fonction du signal traité. En fait, les coefficients multiplicateurs C, C1, C2 sont identiques pour un type de signal d'entrée. La valeur du coefficient est fonction des signaux d'entrée et de sortie, ainsi que de l'échantillonnage en sortie. Ces coefficients peuvent être obtenus à partir d'un décodeur unique qui génère le coefficient correct. Ils reçoivent sur leur autre entrée soit directement la sortie de la mémoire de trame correspondante 12 ou 12', soit la sortie des cellules à retard d'une ligne 300, 301 ou 310, 311. Les sorties des multiplicateurs 302, 303, 304 ou 312, 313, 314 sont envoyées sur les additionneurs 305, 306 ou 315, 316 de telle sorte que l'additionneur 305 ou 315 reçoit les sorties des multiplicateurs 302 et 303 ou 312 et 313 et que l'additionneur 306 ou 316 reçoit la sortie de l'additionneur 305 ou 315 et du multiplicateur 304 ou 314. On s'aperçoit que les filtres verticaux présentent la même structure de base que le filtre vertical utilisé dans le cas du dispositif de traitement de type dynamique 21 qui, dans cette figure, est identique à celui décrit avec référence à la figure 5. Les sorties des deux filtres verticaux pair et impair sont envoyées sur un additionneur 32 qui réalise aussi une coupure du signal, si nécessaire. La sortie de l'additionneur 32 est envoyée sur une cellule à retard d'une ligne 33 pour égaliser les temps de transit à l'intérieur du dispositif de traitement de type statique 30 et du dispositif de traitement de type dynamique 21. Comme dans le cas du dispositif de la figure 5, les sorties des deux dispositifs de traitement sont envoyées sur un dispositif de commutation 23 qui commute vers l'un ou l'autre des dispositifs en fonction d'un signal de mouvement DATV ou du signal issu du dispositif de détection de mouvement qui sera décrit de manière plus détaillée ci-après. Eventuellement un registre tampon de sortie 19 est prévu en sortie du dispositif 23. La séparation des filtres verticaux en un filtre vertical pair et un filtre vertical impair dans le dispositif de la figure 6 permet de simplifier la structure du filtre et de conserver certains stockages de lignes. Le registre tampon 19 est un registre tampon de type FIFO (premier entré, premier sortie) et a pour but de formater la période des lignes actives du signal filtré pour l'affichage en fonction du nombre de lignes à afficher. Dans le cas d'une conversion 625/2:1/50 Hz en 900/2:1/100 Hz ou 1250/2:1/100 Hz, il est nécessaire d'avoir un registre tampon de sortie d'une ligne. Dans le cas d'une transformation 1250/2:1/50 Hz en 900/2:1/100 Hz, le registre tampon de sortie est un registre de 23 lignes. Cette capacité est nécessaire à cause du rapport entre les lignes actives et l'extinction pour un standard 900 lignes.

On expliquera succinctement le fonctionnement des filtres verticaux utilisés dans les dispositifs de traitement des figures 5 et 6. De tels filtres sont nécessaires parce que la fréquence d'échantillonnage verticale de l'image affichée peut être différente de celle de l'image d'entrée. Si l'on considère la conversion d'un signal 1250/2:1/50Hz en un signal d'affichage 900/2:1/100Hz, dans le cas d'une image statique, l'image est formée de 1152 lignes vidéo actives. Ces lignes peuvent être considérées comme échantillonnant l'image dans la direction verticale en donnant une fréquence d'échantillonnage verticale de 1152c/ph (période par hauteur

EP 0 391 760 B1

d'image). Théoriquement, la fréquence verticale maximale sans modification du spectre du signal correspond à la moitié de cette valeur, soit 576 c/ph. Si cette image est affichée en une image 900 lignes, qui contient 864 lignes actives (fréquence d'échantillonnage verticale 864 c/ph), toute information de signal avec une fréquence supérieure à 432 c/ph entraînera des erreurs sur l'image d'affichage. Le filtre vertical statique réalise donc un filtrage passe bas du signal d'entrée de telle sorte qu'aucune information n'existe au-dessus de 432 c/ph.

Pour des images en mouvement de même standard, la fréquence d'échantillonnage verticale est égale au nombre de lignes actives par trame, ou 576 c/ph avec une résolution maximale de 288c/ph. Pour l'affichage, la fréquence d'échantillonnage verticale est aussi réduite d'un facteur moité à 216 c/ph. En conséquence, le filtre vertical dynamique réalise un filtrage passe bas de sorte qu'aucune information n'existe au-dessus de 216 c/ph.

Ces fréquences d'échantillonnage différentes pour les images statiques et dynamiques nécessitent l'utilisation de deux filtres séparés. Les fréquences de coupure des filtres passe bas dépendent des standards d'entrée et de sortie et les réponses en fréquence peuvent être modifiées en modifiant la valeur des coefficients C, C1, C2.

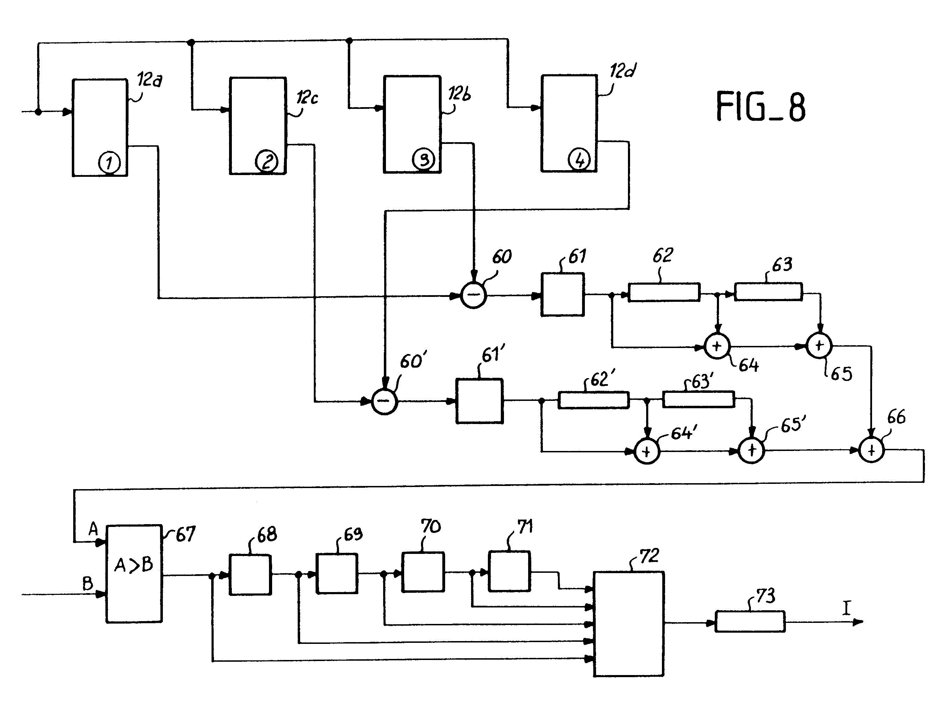

Comme représenté sur la figure 7, les cellules à retard d'une ligne telles que celles utilisées dans les figures 5 et 6, et référencées par exemple 201, 202, 211, 212, 213, 214, 300, 301, 310, 311, 33 sont réalisées de la manière suivante : elles comportent deux mémoires lignes 50, 51 ayant chacune une capacité de 360 x 8 qui correspond à la capacité d'une ligne des mémoires de trame utilisées. Ces deux mémoires 50, 51 sont connectées en utilisant trois commutateurs A, B, C de la manière suivante : le signal d'entrée est envoyé sur la borne 1 du commutateur A dont la sortie est connectée en entrée de la cellule 50. La sortie de la cellule 50 est connectée soit sur la borne 1 du commutateur B ou sur la borne 2 du commutateur C. La sortie du commutateur B est envoyée sur la cellule 51 et la sortie de la cellule 51 est envoyée sur l'entrée 1 du commutateur C ou est dirigée vers le circuit de détection du mouvement comme indiqué par la flèche F. D'autre part, l'entrée 2 du commutateur B reçoit le signal de détection de mouvement soit le signal DATV, soit le signal issu du dispositif de détection de mouvement. La sortie du commutateur C est rebouclée sur l'entrée 2 du commutateur A ou donne le signal de sortie S'. Ainsi, lorsque le commutateur A est en position 1, la cellule 50 reçoit une entrée ou donnée provenant d'une source extérieure. Lorsque le commutateur A est sur la position 2, il reçoit une donnée préalablement stockée dans le dispositif de stockage de lignes. Lorsque les commutateurs B et C sont respectivement en position 1, la cellule stocke 720 échantillons et fonctionne pour du 1250 lignes. Lorsque B et C sont simultanément en position 2, la cellule stocke 360 échantillons et fonctionne pour du 625 lignes. De même, lorsque B et C sont en position 2, la cellule 50 stocke des échantillons utilisés pour le signal vidéo dans le cas d'un filtre vertical tandis que la cellule 51 est utilisée pour stocker une donnée de détection de mouvement.

On décrira maintenant avec référence à la figure 8, un dispositif de détection de mouvement permettant de détecter un mouvement entre deux images conformément au procédé décrit dans l'introduction de la présente demande. Pour détecter le mouvement, on utilise les informations stockées dans les mémoires de trame 12a, 12b, 12c, 12d. Une première image est stockée dans la mémoire de trame impaire 12a, et la mémoire de trame paire 12c et une seconde image est stockée ultérieurement dans la mémoire impaire 12b et la mémoire paire 12d. Le stockage est réalisé de la manière décrite avec référence à la figure 3. Les sorties des mémoires de trame impaires 12a et 12b sont envoyées sur un soustracteur 60 soustrayant le codage d'un pixel contenu dans 12b au codage du pixel de même position spatiale contenu dans 12a. De même, les sorties des mémoires de trame paires 12d, 12c sont envoyées sur un soustracteur 60' qui fonctionne de manière identique au soustracteur 60. La sortie des soustracteurs 60 et 60' sont envoyée respectivement sur un dispositif prenant la valeur absolue 61, 61'. La sortie des dispositifs 61 et 61' sont envoyées sur des cellules à retard d'une ligne 62, 63 et 62', 63' (ce retard est effectué par la partie 51 détaillée dans la figure 7, lorsque les commutateurs B et C sont en position 2). Les cellules permettent d'additionner les échantillons successifs grâce à des additionneurs 64, 65 et 64' 65'. Les additionneurs 64, 65 et 64', 65' sont connectés de telle sorte que l'additionneur 64 ou 64' additionne la sortie du dispositif 61 ou 61' avec la sortie de la cellule 62 ou 62' et l'additionneur 65 ou 65' additionne respectivement la sortie de l'additionneur précédent 64 ou 64' avec la sortie de la cellule 63 ou 63'. Un additionneur 66 additionne les sorties des additionneurs 65 et 65'. On réalise ainsi l'algorithme :

$$DP_{on} = \sum_{y=-2}^{+2} |P_{y\,n} - P_{y\,n-1}|$$

7

dans lequel $P_{on}$, $P_{-2n}$ et $P_{2n}$ correspondent au codage de pixels de la mémoire 12b, appartenant à des lignes mémoire différentes mais de même abscisse et $P_{o(n-1)}$, $P_{-2(n-1)}$ et $P_{2(n-1)}$ correspondent au codage de pixels de même position spatiale dans la mémoire 12a ;

$P_{-1n}$ ou $P_{1n}$ correspondent au codage de pixels de la mémoire 12d, appartenant à des lignes mémoires différentes adjacentes aux lignes mémoire des mémoires 12a et 12b traitées, mais de même abscisse et $P_{-1(n-1)}$, $P_{1(n-1)}$ correspondent au codage de pixels de même position spatiale de la mémoire 12c.

La sortie de l'additionneur 66 est envoyée en entrée d'un comparateur 67 qui compare la valeur A obtenue à une valeur de seuil B en donnant en sortie un "1" si A est supérieur à B et un "0" si A est inférieur ou égal à B. Les sorties du comparateur 67 sont envoyées en série dans les cellules de stockage 68, 69, 70, 71 de sorte que au bout de cinq calculs de $DP_{on}$, l'on effectue une comparaison dans une logique majoritaire de manière à envoyer une information de mouvement majoritaire en fonction des cinq informations de mouvement, par exemple une information de mouvement "1" si trois des informations de mouvement issues des cellules 68, 69, 70, 71 et du comparateur 67 sont codées par un "1". Cette information de mouvement est envoyée dans une cellule 73 à retard d'une ligne, de même type que les cellules 62, 63, 62', 63'. En sortie de cette cellule 73, on envoie une information de mouvement qui est utilisée par le dispositif de conversion de fréquence pour actionner le commutateur 23.

## Revendications

1.  Dispositif de conversion de fréquence trame pour un récepteur de télévision haute définition susceptible de recevoir en entrée des signaux de chrominance ou des signaux de luminance de caractéristiques différentes mais de même fréquence trame et de donner en sortie un signal à une fréquence trame différente, caractérisé en ce qu'il comporte :
    - au moins deux mémoires de trame (12, 12') pour stocker respectivement à une fréquence d'échantillonnage, fonction de la fréquence d'échantillonnage du signal d'entrée, les trames paires dans une mémoire et les trames impaires dans l'autre mémoire ;
    - un dispositif de traitement des signaux de type statique (20) constitué par un multiplexeur (200) connecté respectivement aux mémoires de trame paires (12') et aux mémoires de trames impaires (12) et fonctionnant à la fréquence trame (50Hz) et par deux cellules à retard d'une ligne (201, 202) connectées en série en sortie du multiplexeur ;
    - un dispositif de traitement des signaux de type dynamique (21) constitué par un filtre vertical, ledit filtre vertical étant connecté aux mémoires de trame paires et impaires par l'intermédiaire d'un premier dispositif de commutation (210) fonctionnant à une fréquence (25Hz) moitié de la fréquence trame d'entrée ;
    - un deuxième dispositif de commutation (23) à deux entrées et une sortie dont les entrées sont connectées respectivement au dispositif de traitement des signaux de type statique et au dispositif de traitement des signaux de type dynamique, la commutation du dispositif étant commandée par un signal de détection de mouvement (DATV, I).

2.  Dispositif de conversion de fréquence trame pour un récepteur de television haute définition susceptible de recevoir en entrée des signaux de chrominance ou des signaux de luminance de caractéristiques différentes mais de même fréquence trame et de donner en sortie un signal à une fréquence trame différente, caractérisé en ce qu'il comporte :
    - au moins deux mémoires de trame (12, 12') pour stocker respectivement à une fréquence d'échantillonnage, fonction de la fréquence d'échantillonnage du signal d'entrée, les trames paires dans une mémoire et les trames impaires dans l'autre mémoire ;
    - un dispositif de traitement des signaux de type statique (30) constitué par deux filtres verticaux identiques, connectés respectivement en sortie des mémoires de trames paires (12') et des mémoires de trames impaires (12) et dont les sorties sont connectées à un additionneur (32) et par une cellule à retard d'une ligne (33) connectée en sortie de l'additionneur ;
    - un dispositif de traitement des signaux de type dynamique (21) constitué par un filtre vertical, ledit filtre vertical étant connecté aux mémoires de trame paires et impaires par l'intermédiaire d'un premier dispositif de commutation (210) fonctionnant à une fréquence (25Hz) moitié de la fréquence trame d'entrée ;
    - un deuxième dispositif de commutation (23) à deux entrées et une sortie dont les entrées sont connectées respectivement au dispositif de traitement des signaux de type statique et au dispositif de traitement des signaux de type dynamique, la commutation du dispositif étant commandée par un signal de détection de mouvement (DATV, I).

**3.** Dispositif selon l'une quelconque des revendications 1 et 2, caractérisé en ce que le filtre vertical comporte en série N cellules donnant un retard déterminé, N + 1 multiplicateurs recevant sur une entrée un coefficient multiplicateur C fonction du signal d'entrée et sur l'autre entrée respectivement la sortie d'une cellule ou l'entrée de la première cellule et N additionneurs, le premier additionnant les sorties des deux premiers multiplicateurs, les autres additionnant la sortie de l'additionneur précédent avec la sortie du multiplicateur de rang + 1.

**4.** Dispositif selon la revendication 3, caractérisé en ce que, dans le cas du dispositif de traitement des signaux de type dynamique, le filtre vertical comporte en série quatre cellules (211, 212, 213, 214) donnant un retard d'une ligne, cinq multiplicateurs (215, 216, 217, 218, 219) recevant sur une entrée un coefficient multiplicateur C fonction du signal d'entrée et sur l'autre entrée respectivement la sortie d'une cellule (211, 212, 213, 214) ou l'entrée de la première cellule et quatre additionneurs (220, 221, 222, 223), le premier additionnant les sorties des deux premiers multiplicateurs (215, 216), les autres additionnant la sortie de l'additionneur précédent avec la sortie du multiplicateur de rang + 1.

**5.** Dispositif selon l'une quelconque des revendications 1 à 4, caractérisé en ce que chaque cellule à retard d'une ligne est constituée par deux mémoires-ligne (50, 51) dont la capacité correspond à une ligne de mémoires de trame (12a, 12b, 12c, 12d), la première mémoire ligne (50) étant connectée par l'intermédiaire d'un commutateur (A), soit au signal d'entrée, soit au signal de sortie, la seconde mémoire ligne (51) étant connectée par l'intermédiaire d'un commutateur (B), soit à la première mémoire ligne, soit au signal de detection de mouvement (I ou DATVI) et la sortie étant connectée au moyen d'un commutateur (C), soit à la sortie de la première mémoire ligne, soit à la sortie cellule.

**6.** Dispositif selon l'une quelconque des revendications 1 à 5, caractérisé en ce qu'il comporte de plus un registre tampon (19) de type FIFO connecté en sortie du dispositif de commutation (23) pour formater le signal de sortie.

**7.** Dispositif selon l'une quelconque des revendications 1 à 6, caractérisé en ce que chaque mémoire de trame (12, 12') comporte deux mémoires de trame (12a, 12b, 12c, 12d) recevant des signaux différents et connectés en sortie aux dispositifs de traitement par l'intermédiaire de multiplexeur (13a, 13b, 14).

**8.** Dispositif selon les revendications 1 à 7, caractérisé en ce que les signaux d'entrée sont constitués par les signaux de chrominance ou les signaux de luminance 1250/2:1/50Hz HD-MAC décodés ou par les signaux de chrominance ou les signaux de luminances 625/2:1/50Hz MAC, PAL, SECAM décodés.

**9.** Dispositif selon l'une quelconque des revendications 7 et 8, caractérisé en ce que dans le cas de signaux d'entrée 1250/2:1/50Hz HD-MAC décodés, chaque mémoire de trame (12a, 12b, 12c, 12d) a une capacité de 576 lignes X le nombre de pixels traités par ligne, X le nombre de bits de codage d'un pixel, les deux mémoires de trame paires (12c, 12d) étant écrites alternativement par les échantillons d'une trame paire et les deux mémoires de trame impaires (12c, 12d) par les échantillons d'une trame impaire a une fréquence fonction de la fréquence de modulation des signaux d'entrée et étant lues a une fréquence fonction de la fréquence trame à obtenir.

**10.** Dispositif selon l'une quelconque des revendications 7 et 8, caractérisé en ce que, dans le cas de signaux d'entrée 625/2:1/50Hz MAC, PAL, SECAM décodés, chaque mémoire trame a une capacité de 288 lignes X le nombre de pixels traités par ligne X le nombre de bits de codage d'un pixel, les mémoires-trame (12a, 12b, 12c, 12d) étant écrites par des trames successives à une fréquence fonction de la fréquence de modulation des signaux d'entrée.

**11.** Dispositif de conversion de fréquence trame pour un récepteur de télévision haute définition, caractérisé en ce qu'il est constitué par deux dispositifs selon l'une quelconque des revendications 1 à 10, connectés en parallèle entre un démultiplexeur (11) envoyant les pixels pairs sur un dispositif et les pixels impairs sur l'autre dispositif et un multiplexeur de sortie.

**12.** Procédé de détection de mouvement dans une image de télévision codée, utilisé avec un dispositif de conversion de fréquence selon l'une des revendications 1 a 11, caractérisé en ce qu'il consiste à appliquer, au niveau des pixels de même position spatiale correspondant à deux images temporellement différentes,

l'algorithme suivant :

$$DP_{on} = \sum_{y=-i}^{y=+i} \left| P_{yn} - P_{yn-1} \right|$$

(avec y correspondant à des lignes-images successives et n et n - 1 à deux images temporellement différentes, et i un entier representant le nombre de ligne-images a traiter encadrant la ligne-image choisie);

- puis a comparer la valeur obtenue $DP_{on}$ a une valeur de seuil et à emettre une information de mouvement ou de non mouvement en fonction du résultat de la comparaison.

13. Procédé selon la revendication 12, caractérisé en ce que l'algorithme est applique en utilisant les pixels appartenant à cinq ligne-images consécutives.

14. Procédé selon l'une quelconque des revendications 12 et 13, caractérisé en ce qu'une information de mouvement finale est obtenue en comparant les informations de mouvement données par plusieurs pixels de position spatiale différente appartenant à une même ligne-image.


**Patentansprüche**

1. Bildfrequenz-Umsetzungsvorrichtung für einen hochauflösenden Fernsehempfänger, der am Eingang Chrominanz- oder Luminanzsignale mit unterschiedlichen Eigenschaften, jedoch gleicher Bildfrequenz empfangen kann und am Ausgang ein Signal mit einer anderen Bildfrequenz abgeben kann, dadurch gekennzeichnet, daß sie enthält:
   - wenigstens zwei Bildspeicher (12, 12'), um mit einer von der Abtastfrequenz des Eingangssignals abhängigen Abtastfrequenz die geradzahligen Bilder in einem Speicher und die ungeradzahligen Bilder im anderen Speicher zu speichern;
   - eine statische Signalverarbeitungsvorrichtung (20), die von einem jeweils an die Speicher (12') für geradzahlige Bilder und an die Speicher (12) für ungeradzahlige Bilder angeschlossenen und mit der Bildfrequenz (50 Hz) arbeitenden Multiplexer (200) und zwei in Serie mit dem Ausgang des Multiplexers verbundenen Zellen (201, 202) mit einer Verzögerung um eine Zeile gebildet ist;
   - eine dynamische Signalverarbeitungsvorrichtung (21), die von einem vertikalen Filter gebildet ist, das über eine erste mit einer der Hälfte der Eingangsbildfrequenz entsprechenden Frequenz (25 Hz) arbeitende Umschaltvorrichtung (210) an die Speicher für ungeradzahlige Bilder und geradzahlige Bilder angeschlossen ist;
   - eine zweite Umschaltvorrichtung (23), die zwei Eingänge und einen Ausgang aufweist, wobei die Eingänge an die statische Signalverarbeitungsvorrichtung bzw. an die dynamische Signalverarbeitungsvorrichtung angeschlossen sind und das Umschalten der Vorrichtung durch ein Bewegungserkennungssignal (DATV, I) gesteuert wird.

2. Bildfrequenz-Umsetzungsvorrichtung für einen hochauflösenden Fernsehempfänger, der am Eingang Chrominanz- oder Luminanzsignale mit unterschiedlichen Eigenschaften, jedoch gleicher Bildfrequenz empfangen kann und am Ausgang ein Signal mit einer anderen Bildfrequenz abgeben kann, dadurch gekennzeichnet, daß sie enthält:
   - wenigstens zwei Bildspeicher (12, 12'), um mit einer von der Abtastfrequenz des Eingangssignals abhängigen Abtastfrequenz die geradzahligen Bilder in einem Speicher und die ungeradzahligen Bilder im anderen Speicher zu speichern;
   - eine statische Signalverarbeitungsvorrichtung (30), die von zwei gleichen, jeweils am Ausgang der Speicher (12') für geradzahlige Bilder und der Speicher (12) für ungeradzahlige Bilder angeschlossenen Vertikalfiltern, deren Ausgänge mit einem Addierer (32) verbunden sind, und von einer am Ausgang des Addierers angeschlossenen Zelle (33) mit einer Verzögerung um eine Zeile gebildet ist;
   - eine dynamische Signalverarbeitungsvorrichtung (21), die von einem vertikalen Filter gebildet ist, das über eine erste mit einer der Hälfte der Eingangsbildfrequenz entsprechenden Frequenz (25 Hz) arbeitende Umschaltvorrichtung (210) an die Speicher für ungeradzahlige Bilder und geradzahlige Bilder angeschlossen ist;
   - eine zweite Umschaltvorrichtung (23), die zwei Eingänge und einen Ausgang aufweist, wobei die Eingänge an die statische Signalverarbeitungsvorrichtung bzw. an die dynamische Signalverarbeitungsvorrichtung angeschlossen sind und das Umschalten der Vorrichtung durch ein Bewegungserkennungssignal (DATV, I) gesteuert wird.

3. Vorrichtung nach einem der Ansprüche 1 und 2, dadurch gekennzeichnet, daß das Vertikalfilter in Serie N, eine bestimmte Verzögerung ergebende Zellen, N + 1 Multiplizierer, die an einem Eingang einen vom Eingangssignal abhängigen Multiplikationskoeffizienten C und am anderen Eingang das Ausgangssignal einer Zelle oder das Eingangssignal der ersten Zelle empfangen, und N Addierer enthält, wobei der erste die Ausgangssignale der zwei ersten Multiplizierer addiert, während die anderen das Ausgangssignal des vorangehenden Addierers zum Ausgangssignal des Multiplizierers der Rangordnung +1 addieren.

4. Vorrichtung nach Anspruch 3, dadurch gekennzeichnet, daß für den Fall der dynamischen Signalverarbeitungsvorrichtung das Vertikalfilter in Serie vier Zellen (211, 212, 213, 214), die eine Verzögerung um eine Zeile ergeben, fünf Multiplizierer (215, 216, 217, 218, 219), die an einem Eingang einen vom Eingangssignal abhängigen Multiplikationskoeffizienten C und am anderen Eingang das Ausgangssignal einer Zelle (211, 212, 213, 214) oder das Eingangssignal der ersten Zelle empfangen, sowie vier Addierer (220, 221, 222, 223) enthält, wobei der erste die Ausgangssignale der zwei ersten Multiplizierer (215, 216) addiert, während die anderen das Ausgangssignal des vorangehenden Addierers zum Ausgangssignal des Multiplizierers der Rangordnung +1 addieren.

5. Vorrichtung nach einem der Ansprüche 1 bis 4, dadurch gekennzeichnet, daß jede der Zellen mit einer Verzögerung um eine Zeile von zwei Zeilenspeichern (50, 51) gebildet sind, deren Kapazität einer Zeile der Bildspeicher (12a, 12b, 12c, 12d) entspricht, wobei der erste Zeilenspeicher (50) über einen Umschalter (A) entweder an das Eingangssignal oder an das Ausgangssignal gelegt ist, während der zweite Zeilenspeicher (51) über einen Umschalter (B) entweder mit dem ersten Zeilenspeicher verbunden oder an das Bewegungserkennungssignal (I oder DATVI) gelegt ist, und der Ausgang mittels eines Umschalters (C) mit dem Ausgang des ersten Zeilenspeichers oder dem Ausgang der Zelle verbunden ist.

6. Vorrichtung nach einem der Ansprüche 1 bis 5, dadurch gekennzeichnet, daß er ferner ein Pufferregister (19) vom Typ FIFO enthält, das zum Formatieren des Ausgangssignals mit dem Ausgang der Umschaltvorrichtung (23) verbunden ist.

7. Vorrichtung nach einem der Ansprüche 1 bis 6, dadurch gekennzeichnet, daß jeder Bildspeicher (12, 12') zwei Bildspeicher (12a, 12b, 12c, 12d) aufweist, die unterschiedliche Signale empfangen und am Ausgang über Multiplexer (13a, 13b, 14) an Verarbeitungsvorrichtungen angeschlossen sind.

8. Vorrichtung nach den Ansprüchen 1 bis 7, dadurch gekennzeichnet, daß die Eingangssignale von decodierten 1250/2:1/50 Hz-HD-MAC-Chrominanz- oder -Luminanzsignalen oder von decodierten 625/2:1/50 Hz-MAC-, -PAL-, -SECAM-Chrominanz- oder -Luminanzsignalen gebildet sind.

9. Vorrichtung nach einem der Ansprüche 7 und 8, dadurch gekennzeichnet, daß für den Fall von decodierten 1250/2: 1/50 Hz-HD-MAC-Signalen jeder Bildspeicher (12a, 12b, 12c, 12d) eine Kapazität von 576 Zeilen x der Anzahl der pro Zeile verarbeiteten Pixel x der Anzahl der Codierungsbits eines Pixels hat, wobei die zwei Speicher (12c, 12d) für geradzahlige Bilder abwechselnd mit Abtastwerten eines geradzahligen Bildes beschrieben werden und die zwei Speicher (12c, 12d) für ungeradzahlige Bilder mit Abtastwerten eines ungeradzahligen Bildes mit einer von der Modulationsfrequenz der Eingangssignale abhängigen Frequenz beschrieben werden und mit einer von der zu erzielenden Bildfrequenz abhängigen Frequenz gelesen werden.

10. Vorrichtung nach einem der Ansprüche 7 und 8, dadurch gekennzeichnet, daß für den Fall von decodierten 625/2:1/50 Hz-MAC-, -PAL-, -SECAM-Eingangssignalen jeder Bildspeicher eine Kapazität von 288 Zeilen x der Anzahl von pro Zeile verarbeiteten Pixeln x der Anzahl von Codierungsbits eines Pixels hat, wobei die Bildspeicher (12a, 12b, 12c, 12d) mit aufeinander-folgenden Bildern bei einer von der Modulationsfrequenz der Eingangssignale abhängigen Frequenz beschrieben werden.

11. Bildfrequenz-Umsetzungsvorrichtung für einen hochauflösenden Fernsehempfänger, dadurch gekennzeichnet, daß sie von zwei Vorrichtungen nach einem der Ansprüche 1 bis 10 gebildet ist, die parallel zwischen einem die geradzahligen Pixel zu einer Vorrichtung und die ungeradzahligen Pixel zu der anderen Vorrichtung übertragenden Demultiplexer (11) und einem Ausgangsmultiplexer angeschlossen sind.

**12.** Verfahren zum Erkennen einer Bewegung in einem codierten Fernsehbild in Anwendung mit einer Frequenzumsetzungsvorrichtung gemäß einem der Ansprüche 1 bis 11, dadurch gekennzeichnet, daß es darin besteht, an Pixeln der gleichen räumlichen Position entsprechend zwei zeitlich verschiedenen Bildern den folgenden Algorithmus anzuwenden:

$$DP_{on} = \Sigma \sum_{y=-i}^{y=+i} |P_{yn} - P_{yn-1}|$$

(wobei y aufeinanderfolgenden Bildzeilen und n sowie n - 1 zwei zeitlich verschiedenen Bildern entsprechen und i eine ganze Zahl ist, die der Anzahl der zu verarbeitenden Bildzeilen entspricht, die die gewählte Bildzeile einschließen);

- dann den erhaltenen Wert $DP_{on}$ mit einem Schwellenwert zu vergleichen und abhängig vom Ergebnis des Vergleichs eine Bewegungsinformation oder eine Nichtbewegungsinformation auszusenden.

**13.** Verfahren nach Anspruch 12, dadurch gekennzeichnet, daß der Algorithmus unter Verwendung der Pixel angewendet wird, die zu fünf aufeinanderfolgenden Bildzeilen gehören.

**14.** Verfahren nach einem der Ansprüche 12 und 13, dadurch gekennzeichnet, daß eine Endbewegungsinformation erhalten wird, indem die Bewegungsinformationen verglichen werden, die durch mehrere der gleichen Bildzeile angehörende Pixel mit räumlich verschiedener Position angegeben werden.

## Claims

**1.** Frame frequency conversion device for a high-definition television receiver capable of receiving, as input, chrominance signals or luminance signals with different characteristics but with the same frame frequency, and of giving, as output, a signal at a different frame frequency, characterized in that it includes:
- at least two frame memories (12, 12') for storing, at a sampling frequency which is a function of the sampling frequency of the input signal, respectively the even frames in one memory and the odd frames in the other memory;
- a static-type signal processing device (20) consisting of a multiplexer (200) connected respectively to the even-frame memories (12') and to the odd-frame memories (12) and operating at the frame frequency (50 Hz), and of two one-line delay cells (201, 202) connected in series at the output of the multiplexer;
- a dynamic-type signal processing device (21) consisting of a vertical filter, the said vertical filter being connected to the even and odd frame memories via a first changeover switching device (210) operating at a frequency (25 Hz) which is half of the input frame frequency;
- a second changeover switching device (23) with two inputs and one output, the inputs of which are connected respectively to the static-type signal processing device and to the dynamic-type signal processing device, the switching-over of the device being controlled by a movement detection signal (DATV, I).

**2.** Frame frequency conversion device for a high-definition television receiver capable of receiving, as input, chrominance signals or luminance signals with different characteristics but with the same frame frequency, and of giving, as output, a signal at a different frame frequency, characterized in that it includes:
- at least two frame memories (12, 12') for storing, at a sampling frequency which is a function of the sampling frequency of the input signal, respectively the even frames in one memory and the odd frames in the other memory;
- a static-type signal processing device (30) consisting of two identical vertical filters, connected respectively to the output of the even frame memories (12') and of the odd frame memories (12), and the outputs of which are connected to an adder (32), and of a one-line delay cell (33) connected at the output of the adder;
- a dynamic-type signal processing device (21) consisting of a vertical filter, the said vertical filter being connected to the even and odd frame memories via a first changeover switching device (210) operating at a frequency (25 Hz) which is half of the input frame frequency;
- a second changeover switching device (23) with two inputs and one output, the inputs of which are connected respectively to the static-type signal processing device and to the dynamic-type signal processing device, the switching-over of the device being controlled by a movement detection signal (DATV, I).

3. Device according to either of Claims 1 and 2, characterized in that the vertical filter includes, in series, N cells giving a defined delay, N + 1 multipliers receiving, on one input, a multiplier coefficient C which is a function of the input signal and, on the other input, the output of a cell or the input of the first cell respectively, and N adders, the first adding the outputs of the first two multipliers, the others adding the output of the preceding adder with the output of the multiplier of level + 1.

4. Device according to Claim 3, characterized in that, in the case of the dynamic-type signal processing device, the vertical filter includes, in series, four cells (211, 212, 213, 214) giving a delay of one line, five multipliers (215, 216, 217, 218, 219) receiving, on one input, a multiplier coefficient C which is a function of the input signal and, on the other input, the output of a cell (211, 212, 213, 214) or the input of the first cell respectively, and four adders (220, 221, 222, 223), the first adding the outputs of the first two multipliers (215, 216), the others adding the output of the preceding adder with the output of the multiplier of level + 1.

5. Device according to any one of Claims 1 to 4, characterized in that each one-line delay cell consists of two line memories (50, 51), the capacity of which corresponds to one frame memory line (12a, 12b, 12c, 12d), the first line memory (50) being connected via a changeover switch (A), either to the input signal, or to the output signal, the second line memory (51) being connected via a changeover switch (B), either to the first line memory, or to the movement detection signal (I or DATVI), and the output being connected by means of a changeover switch (C), either to the output of the first line memory, or to the cell output.

6. Device according to any one of Claims 1 to 5, characterized in that it moreover includes a FIFO-type buffer register (19), connected at the output of the changeover switching device (23) in order to format the output signal.

7. Device according to any one of Claims 1 to 6, characterized in that each frame memory (12, 12′) includes two frame memories (12a, 12b, 12c, 12d) receiving different signals and connected, at the output, to the processing devices via a multiplexer (13a, 13b, 14).

8. Device according to Claims 1 to 7, characterized in that the input signals consist of the 1250/2:1/50 Hz decoded HD-MAC chrominance signals or the luminance signals, or of the 625/2:1/50 Hz decoded SECAM, MAC or PAL chrominance signals or the luminance signals.

9. Device according to either of Claims 7 and 8, characterized in that, in the case of 1250/2:1/50 Hz decoded HD-MAC input signals, each frame memory (12a, 12b, 12c, 12d) has a capacity of 576 lines × the number of pixels processed per line, × the number of bits for coding one pixel, the two even frame memories (12c, 12d) being written alternately by the samples of one even frame, and the two odd frame memories (12c, 12d) by the samples of an odd frame at a frequency which is a function of the modulation frequency of the input signals, and being read at a frequency which is a function of the frame frequency to be obtained.

10. Device according to either of Claims 7 and 8, characterized in that, in the case of 625/2:1/50 Hz decoded SECAM, MAC or PAL input signals, each frame memory has a capacity of 288 lines × the number of pixels processed per line × the number of bits for coding a pixel, the frame memories (12a, 12b, 12c, 12d) being written by successive frames at a frequency which is a function of the modulation frequency of the input signals.

11. Frame frequency conversion device for a high-definition television receiver, characterized in that it consists of two devices according to any one of Claims 1 to 10, connected in parallel between a demultiplexer (11) sending the even pixels to one device and the odd pixels to the other device, and an output multiplexer.

12. Method of detecting movement in a coded television image, used with a frequency conversion device according to one of Claims 1 to 11, characterized in that it consists in applying, at the pixels with the same spatial position corresponding to two images differing in time, the following algorithm:

$$DP_{on} = \sum_{y=-i}^{y=+i} \left| P_{yn} - P_{yn-1} \right|$$

(with y corresponding to successive image lines and n and n - 1 to two images differing in time, and i an integer representing the number of image lines to be processed, framing the chosen image line);
- then in comparing the value obtained $DP_{on}$ to a threshold value and in giving out movement or non-movement information as a function of the result of the comparison.

13. Method according to Claim 12, characterized in that the algorithm is applied by using the pixels belonging to five consecutive image lines.

14. Method according to any one of Claims 12 or 13, characterized in that a final movement information item is obtained by comparing the movement information items given by several pixels with a different spatial position belonging to the same image line.

## FIG_1

DATV

E ○——→ [A/D] 1 ——→ 2 [⬜] 1250/2:1/50Hz ——→ [⬜] 3 ——→ 4 [⬜] ——→ 1250/2 : 1/100Hz

625/2 : 1/50Hz

900/2 : 1/100Hz

5 [⬜]

## FIG_7

E' ○—— 1 — (A) 2 ——→ 50 [360 x 8] —— 1 (B) 2 —— 51 [360 x 8] —— 1 (C) 2 ——→ S'

F ←

EP 0 391 760 B1

FIG_2

EP 0 391 760 B1

FIG_3

FIG_4

FIG_5

FIG_6

FIG_8

EP 0 391 760 B1